# EUROPÄISCHE PATENTSCHRIFT

(11) **EP 0 647 512 B1**
(45) Veröffentlichungstag und Bekanntmachung des Hinweises auf die Patenterteilung: **17.05.2000**
(21) Anmeldenummer: 94112911.6
(22) Anmeldetag: 19.08.1994
(51) Int. Cl.: B29C 31/02, B29C 31/06

(54) **Dosiervorrichtung und Verfahren zum Betreiben einer Dosiervorrichtung**
Metering device and method of operating a metering device
Dispositif de dosage et procédé pour actionner un dispositif de dosage

(30) Priorität: 09.10.1993 DE 4334441
(43) Veröffentlichungstag der Anmeldung: 12.04.1995
(73) Patentinhaber: FILTERWERK MANN & HUMMEL GMBH, 71631 Ludwigsburg (DE)
(72) Erfinder: Goth, Gerhard, D-71726 Benningen (DE)
(74) Vertreter: Voth, Gerhard, Dipl.-Ing.

(56) Entgegenhaltungen:
- EP-A- 0 412 330
- DE-A- 1 947 405
- DE-A- 2 052 065
- DE-C- 3 028 260
- FR-A- 799 803
- US-A- 4 880 150

## Beschreibung

Die Erfindung betrifft eine Vorrichtung zum Dosieren körniger, pulverförmiger oder hochviskoser Stoffe insbesondere für Kunststoffverarbeitungsmaschinen, gemäß dem Oberbegriff des Anspruchs 1 sowie ein Verfahren zum Betrieben einer Vorrichtung zum Dosieren Körniger, pulverförmiger oder hochviskoser Stoffe gemäß dem Oberbegriffe des Anspruchs 3.

Derartige Vorrichtungen sind auf der US 4 880 150, EP 312 330 A1, DE 20 52 065 A, DE 19 47 405 A, und FR 799 803 bekannt. Diese Vorrichtungen weisen einen Vorratsbehälter mit dem zu dosierenden Schüttgut auf, an dessen unteren Ende eine drehbare Bodenplatte mit Durchlaßöffnungen angebracht ist. Oberhalb der Bodenplatte befindet sich ein Abstreifer, der durch Drehung der Bodenplatte eine Befüllung der Durchlaßöffnung erlaubt. Durch weitere Drehung der Bodenplatte wird der Inhalt der Durchlaßöffnungen nach unten hin entleert. Das Volumen der Durchlaßöffnung definiert somit die jeweils dosierten Schüttgutmengen.

Im Betrieb derartiger Vorrichtung ist häufig die Entnahme von Schüttgutproben gewünscht. Hierzu muß eine Probeentnahmestelle vorgesehen werden.

Eine derartige Dosiervorrichtung ist in der DE-PS 30 28 260 beschrieben. Die Probeentnahme wird durch einen Rohrstutzen gebildet. Bei der Entnahme von Teilmengen von körnigen oder pulverfömigen Stoffen aus einer derartigen Dosiervorrichtung wird ein extra Deckel zum Verschließen des Rohrstutzens benötigt. Nachteilig daran ist, daß man bei einer derartigen Lösung zusätzliche Teile wie den Deckel, den man im Handbetrieb öffnen und schließen muß, benötigt. Man könnte nun eine aufwendige Mechanik entwickeln, die den Deckel automatisch öffnet und schließt. Dies ist aber kostenaufwendig in Herstellung und Wartung, es würde die Dosiervorrichtung daher verteuern.

Es ist somit Aufgabe der Erfindung, eine Dosiervorrichtung dieser Art dahingehend zu verbessern, daß eine Entnahme von Teilmengen automatisch und kostengünstig stattfinden kann. Erfindungsgemäß wird diese Aufgabe wie in Anspruch 1 und in Anspruch 3 gelöst.

Der erfindungsgemäße Abstreifer bietet einmal die Gewähr, daß das Dosiervolumen definiert ist. Zum anderen erspart der Abstreifer sonst notwendige Schieber oder Klappen, da die Versorgung der zweiten Durchlaßöffnung im Umkehrbetrieb vorzunehmen ist. Der Vorteil dieser Entnahme von Teilmengen liegt in der Möglichkeit, diese Abläufe automatisiert stattfinden zu lassen.

Eine vorteilhafte Weiterbildung der Erfindung ergibt sich aus dem Unteranspruch 2.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. Die Zeichnungen zeigen:

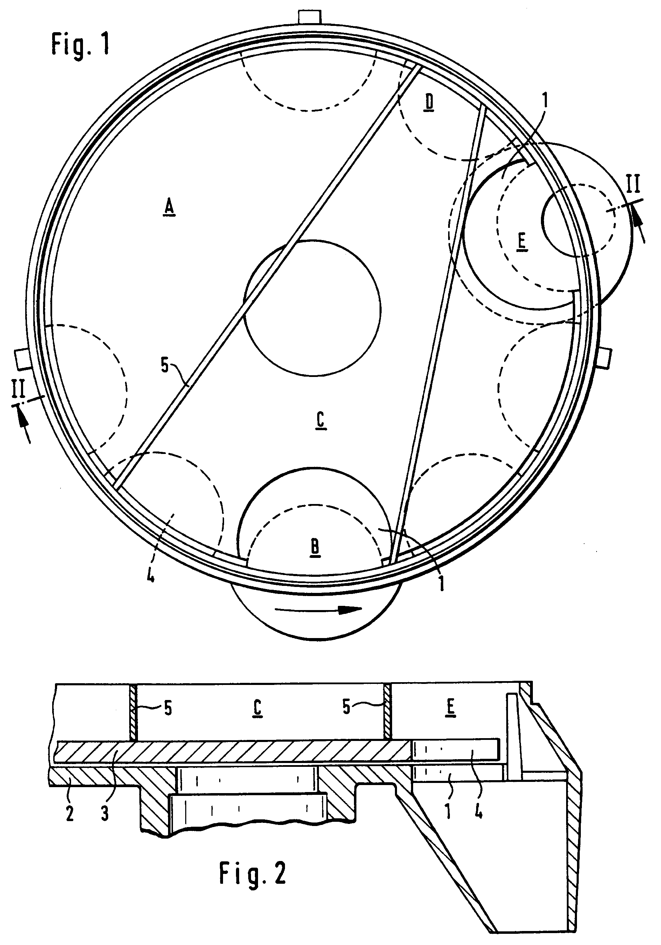

- Figur 1:: eine Draufsicht der Dosiervorrichtung,
- Figur 2:: einen Schnitt entlang der Linie II-II.

Die Dosiervorrichtung wird hier im Dosierbetrieb entgegen dem Uhrzeigersinn betrieben, so daß Material definiert vom Vorratsbereich A mit Hilfe der Durchbrechungen 4 besitzenden Scheibe 3 und dem Abstreifer 5, dem Dosierbereich B zugeführt wird und mittels einer Durchlaßöffnung 1 am weiteren Prozeß teilnimmt. Durch den oben beschriebenen Ablauf kann während des reinen Dosierbetriebs kein Material in den Bereich der Probenentnahme gelangen. Für den Fall, daß doch einmal Material in den Bereich C der Dosierentnahme gelangen sollte, ist der zweite Abstreifer als Sicherheitsmaßnahme angebracht. Dieser als Umlenkung ausgelegte zweite Abstreifer lenkt das überflüssige Material zum Bereich D um und verhindert ein Erreichen des Probeentnahmebereichs. Um während des Dosierbetriebs eine Probe zu entnehmen, wird die Steuerung der Dosiervorrichtung so eingestellt, daß nun im Uhrzeigersinn, also entgegen der üblichen Dosierrichtung, zwei Leertakte laufen, um eventuell vorhandene Dosierreste zu entfernen. Die im Umkehrbetrieb durchgeführte Probenentnahme funktioniert analog der oben beschriebenen Dosierentnahme, wobei die beschriebenen Abstreifer in Verbindung mit der Durchbrechungen besitzenden Scheibe einer definierten Probenentnahme dienen, die im Bereich E realisiert wird.

## Patentansprüche

1. Vorrichtung zum Dosieren körniger, pulverförmiger oder hochviskoser Stoffe, insbesondere für Kunststoffverarbeitungsmaschinen, umfassend eine in einer waagrechten Ebene drehbar angebrachte, eine oder mehrere Durchbrechungen (4) aufweisende Scheibe (3), unmittelbar unterhalb derer eine Bodenplatte (2) angeordnet ist, die mit wenigstens zwei Durchlaßöffnungen (1) versehen ist, von denen wenigstens eine zur Probeentnahme und wenigstens eine zur Dosierung und Weitergabe des Materials vorgesehen ist, dadurch gekennzeichnet, daß unmittelbar oberhalb der drehbaren Scheibe (3) wenigstens ein ortsfester Abstreifer (5) zwischen einem das zu dosierende Material enthaltendem Vorratsbereich (A) und einem Abgabebereich (B, C, D, E) angebracht ist, wobei die Scheibe (3) in Richtung zur Probeentnahme und in die entgegengesetzte Dosierrichtung betreibbar ist.

2. Vorrichtung nach Anspruch 1, dadurch gekennzeichnet, daß ein zweiter Abstreifer (5) zwischen einem zweiten Abgabebereich (E) und dem ersten Abgabebereich (B, C, D,) angeordnet ist.

3. Verfahren zum Betreiben einer Vorrichtung zum Dosieren körniger, pulverförmiger oder hochviskoser Stoffe, insbesondere für Kunststoffverarbeitungsmaschinen mit einer, unmittelbar oberhalb einer ebenen, mit wenigstens zwei Durchlaßöffnungen versehenen Bodenplatte (2), drehbar angebrachten, eine oder mehrere Durchbrechungen besitzenden Scheibe (3), wobei unmittelbar oberhalb der Scheibe (3) wenigstens ein Abstreifer (5) befindet, dadurch gekennzeichnet, daß zur Versorgung der zweiten Durchlaßöffnung (1) der Bodenplatte (2), im Gegensatz zur Versorgung der ersten Durchlaßöffnung (1), die Drehrichtung der Scheibe umgedreht wird.

## Claims

1. Apparatus for metering granular, pulverulent or highly viscous substances, in particular for plastics material processing machines, comprising a disc (3) which is rotatably mounted in horizontal plane and provided with one or more through-apertures (4), with a base plate (2), including at least two through-apertures (1), being arranged directly below said disc, wherein at least one of said through-apertures is provided for sample-taking purposes and at least one for metering and further conveying the material, characterized in that at least one fixed deflector (5) is mounted directly above said rotatable disc (3) between a storage region (A) containing the material to be metered and a delivery region (B, C, D, E), wherein the disc (3) can be operated in the direction toward the sample-taking and in opposite direction of metering.

2. Apparatus according to patent claim 1, characterized in that a second deflector (5) is arranged between a second delivery region (E) and the first delivery region (B, C, D).

3. Method for operating an apparatus for metering granular, pulverulent or highly viscous substances, in particular for plastics material processing machines, comprising a disc (3) including one or more through-apertures, which is rotatably mounted directly above a flat base plate (2) provided with at least two through-apertures, wherein at least one deflector (5) is situated directly above the disc (3), characterized in that contrary to the supply of the first through-aperture (1), the direction of rotation of the disc is reversed in order to supply of the second through-aperture (1) of the base plate (2).

## Revendications

1. Dispositif pour doser des matières granuleuses, pulvérulentes ou à l'état très visqueux, notamment pour des machines travaillant les matières plastiques, comprenant un disque (3) monté en rotation dans un plan horizontal et ayant un ou plusieurs passages (4), et directement en dessous de ce disque, une plaque de fond (2) munie d'au moins deux orifices de passage (1) dont au moins l'un est prévu pour prélever des échantillons et au moins l'un pour doser et faire passer la matière,
caractérisé en ce que
directement au dessus du disque rotatif (3) il y a au moins une raclette fixe (5) installée entre une zone d'alimentation (A) contenant la matière à doser et une zone de distribution (B, C, D, E),
le disque (3) pouvant être entraîné dans le sens du prélèvement d'échantillon et dans le sens opposé correspondant au dosage.

2. Dispositif selon la revendication 1,
caractérisé par
une seconde raclette (5) prévue entre une seconde zone de sortie (E) et la première zone de sortie (B, C, D).

3. Procédé de mise en oeuvre d'un dispositif de dosage de matières granuleuses, pulvérulentes ou fortement visqueuses notamment pour des machines de traitement de matière plastique comprenant un disque (3) ayant un ou plusieurs passages, monté tournant directement au dessus d'une plaque de fond (2) plane ayant au moins deux orifices traversants, avec directement au dessus du disque (3) au moins une raclette (5),
caractérisé en ce que
pour alimenter le second orifice traversant (1) de la plaque de fond (2), on fait tourner le disque dans le sens de rotation opposé à celui servant à l'alimentation du premier orifice traversant (1).
